# EUROPÄISCHE PATENTSCHRIFT

(11) **EP 0 567 689 B1**
(45) Veröffentlichungstag und Bekanntmachung des Hinweises auf die Patenterteilung: **27.03.1996**
(21) Anmeldenummer: 92119305.8
(22) Anmeldetag: 11.11.1992
(51) Int. Cl.: B65G 1/127, A47B 63/06, B65G 17/00

(54) **Feststellvorrichtung für einen Paternosterschrank**
Locking device for Pater-Noster cabinet
Dispositif de blocage pour un meuble à Pater-Noster

(30) Priorität: 28.04.1992 DE 4213924; 21.05.1992 DE 4216894
(43) Veröffentlichungstag der Anmeldung: 03.11.1993
(73) Patentinhaber: HÄNEL & CO. BÜRO-SYSTEME, CH-9450 Altstätten SG (CH)
(72) Erfinder: Hänel, Karl-Bruno, W-7107 Bad Friedrichshall (DE); Hänel, Michael, W-7107 Bad Friedrichshall (DE)
(74) Vertreter: Preissner, Nicolaus, Dipl.-Ing.

(56) Entgegenhaltungen:
- DE-A- 2 059 097
- GB-A- 124 550
- GB-A- 1 141 699

## Beschreibung

Die Erfindung bezieht sich auf eine Feststellvorrichtung für einen Paternosterschrank mit mindestens einer Zugangsöffnung, bei dem mehrere, übereinander angeordnete Tragsätze über seitliche Tragarme an zwei, elektromotorisch angetriebene Tragketten angelenkt sind.

Ein solcher Paternosterschrank dient zur raum- und zeitsparenden Unterbringung von Gütern aller Art, wie z.B. Büromaterialien oder Lagergüter.

In der Regel sind die beiden vorderen Kettenstränge der Tragketten ungleich zu den beiden hinteren Kettensträngen belastet, so daß im Stillstand der stillstehende Antrieb über seine Antriebskette eine Arretierung auf den unlastig belasteten Kettenstrang ausübt.

Bei relativ selten auftretenden Reparaturfällen, wie z.B. dem erforderlichen Austausch eines Antriebsaggregates, kann es dabei erforderlich sein, daß das Servicepersonal einen Zugang durch eine untere Wartungsklappe zu der Anlage erhält und daß ein Lösen der Antriebskette erforderlich ist. In einem solchen Fall ist das Bedürfnis nach Sicherheit des Servicepersonals extrem hoch, so daß für solche Fälle zum Ausschalten einer Unfallgefährdung eine mehrfache Sicherheit, d.h. praktisch eine absolute Sicherheit erreicht werden muß.

In den einschlägigen Unfallverhütungsvorschriften heißt es dazu: "Soweit beim Beheben von Störungen im Arbeitsablauf oder Instandhalten Personen durch gefahrbringende Bewegungen des kraftbetriebenen Arbeitsmittels gefährdet werden können, darf mit diesen Arbeiten erst begonnen werden, nachdem ein Ingangkommen gefahrbringender Bewegungen infolge gespeicherter Energien oder ein unbefugtes, irrtümliches oder unerwartetes Ingangsetzen verhindert ist."

Stand der Technik sind dabei sog. Unlastwarneinrichtungen, die das Überschreiten festgelegter Unlasten von z.B. 20 oder 30 % der Nutzlast feststellen und entsprechende Einlagervorschläge für eine gleichmäßige Beladung machen. Unlastigkeiten sind jedoch an diesen paternosterartigen Schränken in der Praxis immer gegeben.

Nach dem bekannten Stand der Technik sind dabei vorwiegend externe Feststelleinrichtungen zur Arretierung solcher paternosterartigen Einrichtungen im Servicefall üblich, die jedoch im allgemeinen nicht befriedigen.

So ist es üblich, Hölzer oder Metallstangen unterzubauen, die eine Bewegung verhindern. Ferner kann eine Blockierung mit Hilfe von untergeschobenen schweren Gabelstaplern erreicht werden. Schließlich ist es bekannt, die beiden oberen Kettenräder z.B. durch Bolzen zu blockieren.

Alle derartigen Lösungen sind jedoch schwer zu handhaben, da die erforderlichen externen Feststelleinrichtungen nicht sofort vorhanden sind und erst beschafft werden müssen. Bei hohen Schränken dieser Art von z.B. 12 m Höhe sind darüberhinaus Mittel für einen Zugang zu den oberen Kettenrädern über eine obere Wartungsöffnung ebenfalls oft nicht vorhanden. Dabei kann es geradezu gefährlich sein, zur Arretierung einer Feststelleinrichtung eine Bewegung der Tragketten auch nur um einige Millimeter in Betracht zu ziehen.

Eine andere Möglichkeit wäre darin gegeben, den Schrank zunächst leerzuräumen, was aber bei Füllgütern bis zu 20 t Gesamtgewicht bei den Kunden auf wenig Gegenliebe stoßen würde.

Eine weitere Möglichkeit ist dadurch gegeben, daß zwei Antriebsaggregate vorhanden sind, die jeweils die im Schrank befindlichen linke und rechte Tragkette antreiben, wobei eine Verbindungswelle die beiden Antriebe synchronisiert und die Antriebsketten der Antriebe jeweils so überdimensioniert sind, daß eine Arretierung durch nur eine der beiden Antriebsketten möglich ist. Eine solche Lösung ist zwar einfach und zuverlässig, bietet jedoch keine absolute Sicherheit, da immer noch die theoretische Möglichkeit bestehen könnte, daß auch eine solche überdimensionale Kette reißt.

Aufgabe der vorliegenden Erfindung ist es daher, eine integrierte Feststellvorrichtung zu schaffen, die beim Beheben von Störungen im Arbeitsablauf oder bei Instandhaltungsarbeiten Personen sicher vor dem Ingangsetzen gefahrbringender Bewegungen infolge gespeicherter Enegerien schützt und ein unbefugtes, irrtümliches oder unverwartetes Ingangsetzen während der Wartungsarbeiten sicher verhindert.

Zur Lösung dieser Aufgabe ist erfindungsgemäß vorgesehen, daß zumindest eine der Tragketten mittels einer von der Zugangsseite her betätigbaren, zwischen den Kettengliedern eingreifenden und gegen ein rückseitiges Gegenklemmstück arretierbaren Feststellplatte gegen eine die Tragkette führende Tragschiene form- und/oder kraftschlüssig klemmbar ist.

In Weiterbildung der Erfindung weist die Feststellplatte gabelförmig abragende Stege auf, die formschlüssig zwischen den einzelnen Querbolzen einer Reihe von Kettengliedern eingreifen.

Zweckmäßigerweise ist das quaderförmig ausgebildete Gegenklemmstück in eine Nut der Tragschiene von ihrer Rückseite her höhenverschiedlich eingesetzt, gegen das die Feststellplatte über Schraubbolzen verspannbar ist.

Wie sich gezeigt hat, ist damit selbst unter öligen oder fettigen Verhältnissen, d.h. bei einer hohen Schmierung der Tragkette, allein schon die kraftschlüssige Verbindung zwischen den Klemmstücken und der Tragschiene voll ausreichend, um sicher irgendwelche Bewegungen zu verhindern.

Von besonderem Vorteil ist es, wenn das Gegenklemmstück einen zur Tragschiene hin dachförmig geneigten Aufsatz trägt, an den ein von der Feststellplatte durch die Nut der Tragschiene ragender Suchstift entlanggleitet und das Gegenklemmstück in eine vorgegebene Position zur Feststellplatte anhebt derart, daß in der Endstellung die Führungsbohrungen für die Schraubbolzen in der Feststellplatte mit den entsprechenden Gewindebohrungen im Gegenklemmstück fluchten.

Die Nut zur Aufnahme des Gegenklemmstückes sollte dabei eine Länge aufweisen, die etwa ein Kettenglied größer ist als die Höhe des Gegenklemmstückes.

Damit ist eine zusätzliche Sicherheit gegeben, da zweckmäßigerweise das Gegenklemmstück am unteren Ende einen in die Führungsnut eingreifenden Anschlag aufweist, der nach geringfügigem Absenken der Tragkette auf der unteren Querkante der Führungsnut formschlüssig aufruht und damit jede weitere Bewegung sicher unterbindet.

In gleicher Weise kann der dachförmige Aufsatz einen durch die Nut nach innen ragenden Anschlag aufweisen, der eine Bewegung nach oben durch Anschlagen an die obere Querkante der Nut verhindert.

Dabei kann oberhalb und unterhalb der Nut und bündig abschließend mit ihren Querkanten auf die Rückseite der Tragschiene je eine Verstärkungslasche aufgeschweißt sein.

Zur sicheren Betätigung der Feststellplatte von außen ist es zweckmäßig, wenn der Paternosterschrank beiderseits der Zugangsöffnung über auf den Antrieb einwirkende Sicherheitsschalter gesicherte, aufklappbare und die seitliche Tragvorrichtung abdeckende Blenden aufweist derart, daß allein nach deren Aufklappen von außen bis an die Feststellplatte reichende und mit diesem formschlüssig verbindbaren Betätigungshandgriffe einsetzbar sind.

Anhand einer schematischen Zeichnung sind Aufbau und Funktionsweise eines Ausführungsbeipiels nach der Erfindung näher erläutert. Dabei zeigen:
- Figur 1:: einen Paternosterschrank in perspektivischer teilgeschnittener Ansicht mit einer Vielzahl von an Traghebeln aufgehängten Tragsätzen;
- Figur 2:: eine perspektivische Ansicht eines Ausschnittes des seitlichen Antriebes mit Tragkette und Tragschiene;
- Figur 3:: eine Seitenansicht der Feststellvorrichtung im Schnitt und
- Figur 4:: eine Aufsicht auf diese Feststellvorrichtung entsprechend der Schnittlinie IV-IV nach Figur 3

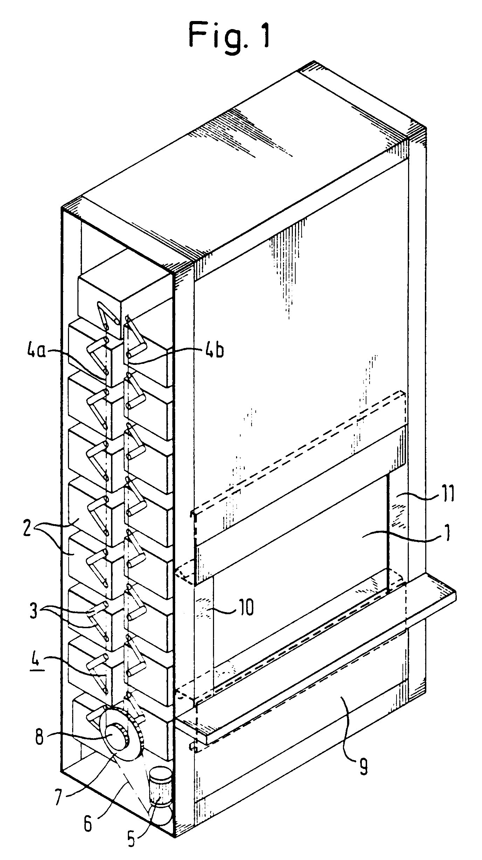

In Figur 1 ist in perspektivischer Ansicht ein solcher Paternosterschrank dargestellt, wobei zur besseren Darstellung die linke Seitenwand weggelassen worden ist. Dieser Paternosterschrank weist eine Zugangsöffnung 1 zum Be- und Entladen mit Füllgüter aller Art auf. Der eigentliche Paternoster zeigt eine Vielzahl von an Traghebeln 3 aufgehängten Tragsätzen 2, wobei die Traghebel 3 an Tragketten 4 angelenkt sind. Diese Tragketten 4 sind dabei jeweils links und rechts der Entnahmeöffnung 1 an den beiden Stirnseiten der Tragsätze 2 angeordnet, wobei hier nur die linke Tragkette 4 gezeigt ist. Der jeweils vordere Tragkettenstrang 4b und der hintere Tragkettenstrang 4a sind im Regelfall unterschiedlich belastet, was einer unterschiedlichen gespeicherten Energie entspricht, die beim Lösen beispielsweise des Kettentriebes 6 vom antreibenden Elektrogetriebemotor 5 her zu einer unerwünschten Bewegung führen würde.

Die paternosterartig übereinander angeordneten Tragsätze 2 sind, wie aus der Zeichnung ersichtlich, durch den elektromotorischen Antrieb 5 über einen Kettentrieb 6 angetrieben. Das durch den Kettentrieb 6 angetriebene Kettenrad 7 ist durch eine Welle mit dem unteren Kettenrad 8 der Tragkette 4 verbunden. Dieser elektromotorische Antrieb kann dabei, wie dargestellt, einseitig erfolgen und nur auf die linke Tragkette 4 einwirken. Es ist aber auch möglich, beidseitig auf der linken und auf der rechten Seite je einen Antrieb vorzusehen. Die unteren Kettenräder 8 der linken und rechten Tragkette sind dabei im einseitigen Antriebsfall zur Übertragung der halben Kraft und im beidseitigen Antriebsfall zur Synchronisation über eine Welle verbunden.

Der Zugang zu den Antriebseinheiten ist über eine untere, mit Sicherheitsschaltern abgesicherte Wartungsklappe 9 gegeben. Darüberhinaus sind die seitlichen Führungsteile im Schrank durch Blenden 10 und 11 links und rechts verkleidet. Diese Blenden 10 und 11 sind jeweils auch durch Sicherheitsschalter abgesichert, die auf den Antrieb einwirken.

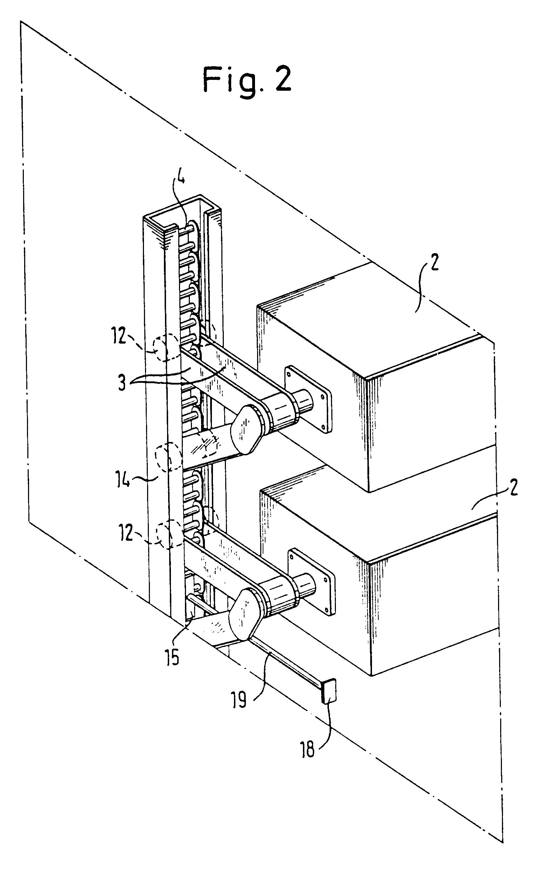

In Figur 2 ist in einer Teilansicht die Aufhängung von zwei Tragsätzen 2 gezeigt. Diese sind über Traghebel 3 an die Tragkette 4 angelenkt. Die Tragkette 4 wird dabei über Rollen 12 in einer U-förmigen, nach vorne offenen Tragschiene 14 geführt. Gleichzeitig ist in dieser Figur schematisch die eigentliche Feststellvorrichtung 15 mit einem abragenden Betätigungshandgriff 16 gezeigt, der - entsprechend Figur 1 - über die aufgeklappte Blende 10 nach außen ragt.

Derartige Feststellvorrichtungen sind in der Regel jeweils an der linken und an der rechten Tragschiene angebracht.

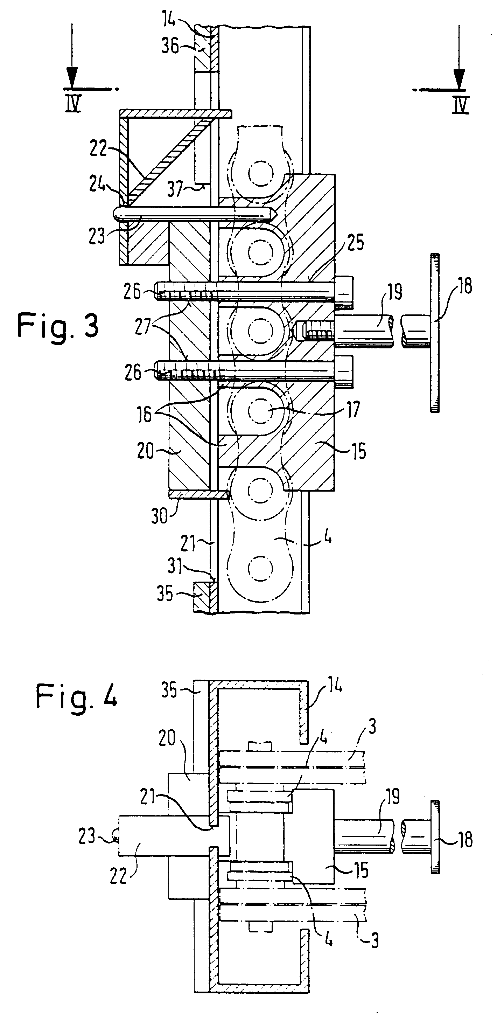

In Figur 3 und 4 sind in Seitenansicht und in Aufsicht im Schnitt die Einzelteile der eigentlichen Feststellvorrichtungen näher erläutert. Dabei ist zunächst die U-förmige Tragschiene 14 mit der darin geführten Tragkette 4 und den angelenkten Traghebeln 3 zu erkennen. In die Tragkette 4 ist nunmehr von der Vorderseite her der eine Teil der Feststellvorrichtung, nämlich die Feststellplatte 15 eingesetzt, die gabelförmig abragende Stege 16 aufweist, die formschlüssig zwischen einzelnen Querbolzen 17 einer Reihe von benachbarten Kettengliedern der Tragkette 4 eingreifen. Diese rechenförmige Feststellplatte 15 wird dabei im Servicefall mittels eines Handgriffes 18 und einer entsprechenden verlängernden Zwischenstange 19 von vorn in die Tragkette 4 geschoben.

Auf der Rückseite der Tragschiene 14 ist gegenüber der Feststellplatte 15 ein quaderförmiges Gegenklemmstück 20 angeordnet, das über eine Nut 21 bereits bei Montage des Schrankes in die Tragschiene 14 eingehängt ist. Dieses Gegenklemmstück 20 trägt einen dachförmig zur Tragschiene 14 hin geneigten Aufsatz 22, an dem beim Einschieben der Feststellplatte 15 ein von dieser durch die Nut 21 ragender Suchstift 23 entlanggleitet und dieses Gegenklemmstück 20 solange in seiner Höhe verschiebt, bis der Suchstift 23 in einer rückwärtigen Bohrung 24 des Aufsatzes 22 einrastet. Damit hat das Gegenklemmstück 20 die gewünschte geometrische Höhe erreicht, so daß damit dann auch entsprechende Führungsbohrungen 25 für Innensechskantschrauben 26 mit den entsprechenden Gewindebohrungen 27 im Gegenklemmstück 20 fluchten. Damit können dann über entsprechend lange Schlüssel die Innensechskantschrauben 26 von außen her eingesetzt und mit kontrolliertem Drehmoment angezogen werden, um damit Feststellplatte 15 und Gegenklemmstück 20 fest gegeneinander und gegen die Tragschiene 14 zu arretieren, so daß durch diesen Kraftschluß eine weitere Bewegung der Tragkette 4 ausgeschlossen ist.

Als zusätzliche Sicherung ist noch folgendes vorgesehen. Die Aufnahmenut 21 für das Gegenklemmstück 20 ist im allgemeinen nur etwa ein Kettenglied länger als die Höhe des Gegenklemmstückes 20 mit dem Aufsatz 22 beträgt. Am unteren Ende des Gegenklemmstückes 20 ist dabei noch ein durch die Nut 21 nach innen ragender Anschlag 30 vorgesehen. Bei einer dennoch unvorhergesehenen Bewegung der Tragkette 4 und damit der Feststellvorrichtung nach unten wird dieser Anschlag 30 nach wenigen Millimetern Bewegung auf der unteren Querkante 31 der Nut 21 formschlüssig aufsitzen und damit eine zusätzliche Sicherheit gegen eine weitere Bewegung der Tragkette 4 darstellen.

Zur zusätzlichen Verstärkung ist dabei auf der Rückseite der Tragschiene 14 unterhalb der Nut 21 und bündig abschließend mit der Querkante 31 eine Verstärkungslasche 35 aufgeschweißt, womit in diesen Bereichen die Tragschiene 14 ausreichend gegen zusätzlich auftretende Kräfte und Lasten versteift ist

In gleicher Weise ist am oberen Ende der Nut 21 eine Verstärkungslasche 36 aufgeschweißt, die im oberen Bereich die Nut 21 noch seitlich umfaßt. Beim unbeabsichtigten Hochfahren der Tragkette 4 bzw. der Feststellvorrichtung stößt dann die Oberkante des Gegenklemmstückes 20 gegen die unteren, seitlich der Nut 21 verlaufenden Stegenden 37 der Verstärkungslasche 36, so daß damit auch eine Aufwärtsbewegung der Tragkette sicher begrenzt wird.

Wie bereits ausgeführt, sind die beiden Blenden 10 und 11 seitlich der Zugangsöffnung 1 durch Sicherheitsschalter abgesichert. Das bedeutet, daß diese Blenden 10 und 11 auch erst nach Entfernen der Feststellvorrichtung, d.h. der Feststellplatte 15 und des nach außen ragenden Handgriffes 18 wieder geschlossen werden können, so daß damit die Gefahr einer Sachbeschädigung durch eventuelles Nichtentfernen der Feststelleinrichtung nicht mehr gegeben ist.

Insgesamt ergibt sich also eine Vorrichtung mit der mit einfachen Mitteln das Festsetzen der Antriebskette eines solchen Paternosterschrankes sicher gewährleistet ist, so daß jedwede Reparatur- und Wartungsarbeiten ohne Gefährung des Servicepersonals und ohne vorher erforderliches Entladen des Schrankes durchgeführt werden können.

## Patentansprüche

1. Feststellvorrichtung für einen Paternosterschrank mit mindestens einer Zugangsöffnung (1), bei dem mehrere, übereinander angeordnete Tragsätze (2) über seitliche Tragarme (3) an zwei, elektromotorisch angetriebene Tragketten (4) angelenkt sind, dadurch gekennzeichnet, daß zumindest eine der Tragketten (4) mittels einer von der Zugangsseite (1) her betätigbaren, zwischen den Kettengliedern eingreifenden und gegen ein rückseitiges Gegenklemmstück(20) arretierbaren Feststellplatte (15) gegen eine die Tragkette (4) führende Tragschiene (14) form- und/oder kraftschlüssig klemmbar ist.

2. Feststellvorrichtung nach Anspruch 1, dadurch gekennzeichnet, daß die Feststellplatte (15) gabelförmig abragende Stege (16) aufweist, die formschlüssig zwischen den einzelnen Querbolzen (17) einer Reihe von Kettengliedern eingreifen.

3. Feststellvorrichtung nach Anspruch 1 oder 2, dadurch gekennzeichnet, daß das quaderförmig ausgebildete Gegenklemmstück (20) in eine Nut (21) der Tragschiene (14) von ihrer Rückseite her höhenverschieblich eingesetzt ist, gegen das die Feststellplatte (15) über Schraubbolzen (26) verspannbar ist.

4. Feststellvorrichtung nach Anspruch 3, dadurch gekennzeichnet, daß das Gegenklemmstück (20) einen zur Tragschiene (14) hin dachförmig geneigten Aufsatz (22) trägt, an den ein von der Feststellplatte (15) durch die Nut (21) der Tragschiene (14) ragender Suchstift (23) entlanggleitet und das Gegenklemmstück (20) in eine vorgegebene Position zur Feststellplatte (15) anhebt, derart, daß in der Endstellung die Führungsbohrungen (25) in der Feststellplatte (15) mit den entsprechenden Gewindebohrungen (27) im Gegenklemmstück (20) fluchten.

5. Feststellvorrichtung nach Anspruch 3, dadurch gekennzeichnet, daß die Nut (21) zur Aufnahme des Gegenklemmstückes (20) eine Länge aufweist, die etwa ein Kettenglied größer ist als die Höhe des Gegenklemmstückes (20).

6. Feststellvorrichtung nach Anspruch 5, dadurch gekennzeichnet, daß das Gegenklemmstück (20) an seiner Unterkante einen durch die Nut (21) nach innen ragenden Anschlag (30) aufweist.

7. Feststellvorrichtung nach Anspruch 5 und 6, dadurch gekennzeichnet, daß unterhalb der Nut (21) und bündig abschließend mit ihrer Querkante (31) auf die Rückseite der Tragschiene (14) eine Verstärkungslasche (35) aufgeschweißt ist.

8. Feststellvorrichtung nach Anspruch 5, dadurch gekennzeichnet, daß am oberen Ende der Nut (21) eine Vestärkungslasche (36) aufgeschweißt ist, die mit seitlichen Stegen (37) das obere Ende der Nut (21) seitlich umfaßt derart, daß bei Hochfahren der Feststellvorrichtung die Stege (37) in Kontakt mit der Oberkante des Gegenklemmstückes (20) kommen.

9. Feststellvorrichtung nach einem oder mehreren der Ansprüche 1 - 8, dadurch gekennzeichnet, daß der Paternosterschrank beiderseits der Zugangsöffnung (1) über auf den Antrieb (5) einwirkende Sicherheitsschalter gesicherte, aufklappbare und die seitlichen Tragvorrichtungen (3, 4) abdeckende Blenden (10, 11) aufweist, derart, daß allein nach deren Aufklappen von außen bis an die Feststellplatte (15) reichende und mit diesem formschlüssig verbindbaren Betätigungshandgriffe (18, 19) einsetzbar sind.

## Claims

1. Locking device for a paternoster cabinet, which has at least one access opening (1) and in which a plurality of carrying units (2) disposed one above the other are coupled by lateral carrying arms (3) to two electric motor-driven carrying chains (4), characterized in that at least one of the carrying chains (4) is clampable by means of a locking plate (15), which is operable from the access side (1), engages between the chain links and is arrestable against a rear counterpart clamping piece (20), in a form-fit and/or force-locking manner against a mounting rail (14) guiding the carrying chain (4).

2. Locking device according to claim 1, characterized in that the locking plate (15) comprises webs (16) projecting in a fork-like manner, which engage in a form-fit manner between the individual transverse pins (17) of a series of chain links.

3. Locking device according to claim 1 or 2, characterized in that the cuboidal counterpart clamping piece (20) is inserted in a vertically displaceable manner into a groove (21) of the mounting rail (14) from the rear of said rail, the locking plate (15) being braceable against said counterpart clamping piece by means of screw bolts (26).

4. Locking device according to claim 3, characterized in that the counterpart clamping piece (20) carries a top piece (22), which is inclined in a roof-like manner towards the mounting rail (14) and along which a locating pin (23) projecting from the locking plate (15) through the groove (21) of the mounting rail (14) slides and lifts the counterpart clamping piece (20) into a predetermined position relative to the locking plate (15) such that, in the end position, the guide holes (25) in the locking plate (15) are aligned with the corresponding tapped holes (27) in the counterpart clamping piece (20).

5. Locking device according to claim 3, characterized in that the groove (21) for receiving the counterpart clamping piece (20) has a length which is greater by, say, one chain link than the height of the counterpart clamping piece (20).

6. Locking device according to claim 5, characterized in that the counterpart clamping piece (20) at its bottom edge has a stop (30) projecting inwards through the groove (21).

7. Locking device according to claim 5 and 6, characterized in that below the groove (21) and terminating flush with its transverse edge (31) a reinforcing lug (35) is welded onto the rear of the mounting rail (14).

8. Locking device according to claim 5, characterized in that welded to the top end of the groove (21) is a reinforcing lug (36) having lateral webs (37), which laterally embrace the top end of the groove (21) in such a way that, upon upward travel of the locking device, the webs (37) come into contact with the top edge of the counterpart clamping piece (20).

9. Locking device according to one or more of claims 1 - 8, characterized in that the paternoster cabinet on either side of the access opening (1) has panels (10, 11), which are protected by safety switches acting upon the drive (5), may be hinged open and cover the lateral carrying devices (3, 4), such that only after said panels have been hinged open are operating handles (18, 19) insertable, which extend from outside up to the locking plate (15) and are connectable in a form-fit manner thereto.

## Revendications

1. Dispositif de blocage pour un meuble à pater-noster comportant au moins une ouverture d'accès (1) et dans lequel sont prévus plusieurs jeux de supports (2) agencés les uns au-dessus des autres via des bras de support latéraux (3) en articulation sur deux chaînes de support (4) entraînées par moteur électrique, caractérisé en ce que l'une au moins des chaînes de support (4) peut être coincée par coopération et formes et/ou de forces contre un rail de support (14) guidant la chaîne de support (4), au moyen d'un plateau de blocage (15) susceptible d'être actionné depuis le côté d'accès (1), s'engageant entre les maillons de chaîne, et pouvant être arrêté contre un élément de coincement complémentaire (20) du côté arrière.

2. Dispositif de blocage selon la revendication 1, caractérisé en ce que le plateau de blocage (15) présente des barrettes (16) faisant saillie en forme de fourchette, qui s'engagent par coopération de formes entre les boulons transversaux individuels (17) d'une série de maillons de chaîne.

3. Dispositif de blocage selon l'une ou l'autre des revendications 1 et 2, caractérisé en ce que l'élément de coincement complémentaire (20) réalisé en forme de parallélépipède est mis en place dans une gorge (21) du rail de support (14) depuis son côté arrière avec faculté de se déplacer en hauteur, et en ce que le plateau de blocage (15) peut être serré via des boulons filetés (26) contre l'élément de coincement complémentaire (20).

4. Dispositif de blocage selon la revendication 3, caractérisé en ce que l'élément de coincement complémentaire (20) porte un chapeau (22), incliné en forme de toit vers le rail de support (14) et le long duquel coulisse une tige de recherche (23) pénétrant depuis le plateau de blocage (15) à travers la gorge (21) du rail de support (14), et soulève l'élément de coincement complémentaire (20) dans une position prédéterminée par rapport au plateau de blocage (15), de telle sorte qu'en position finale, les perçages de guidage (25) dans le plateau de blocage (15) s'alignent avec les perçages taraudés correspondants (27) dans l'élément de coincement complémentaire (20).

5. Dispositif de blocage selon la revendication 3, caractérisé en ce que la gorge (21) a, pour la réception de l'élément de coincement complémentaire (20), une longueur qui est plus importante, approximativement de la valeur d'un maillon de chaîne, que la hauteur de l'élément de coincement complémentaire (20).

6. Dispositif de blocage selon la revendication 5, caractérisé en ce que l'élément de coincement complémentaire (20) présente sur son arête inférieure une butée (30) pénétrant à travers la gorge (21) vers l'intérieur.

7. Dispositif de blocage selon les revendications 5 et 6, caractérisé en ce qu'une patte de renforcement (35) est soudée sur la face arrière du rail de support (14) au-dessous de la gorge (21) et de manière à se terminer en affleurement avec son arête transversale (31).

8. Dispositif de blocage selon la revendication 5, caractérisé en ce qu'à l'extrémité supérieure de la gorge (21) est soudée une patte de renforcement (36) qui entoure latéralement l'extrémité supérieure de la gorge (21) par des barrettes latérales (37), de telle sorte que lorsque le dispositif de blocage est déplacé vers le haut, les barrettes (37) viennent en contact avec l'arête supérieure de l'élément de coincement complémentaire (20).

9. Dispositif de blocage selon l'une ou plusieurs des revendications 1 à 8, caractérisé en ce que le meuble à pater-noster présente des deux côtés de l'ouverture d'accès (1) des obturateurs (10, 11) bloqués via des interrupteurs de sécurité agissant sur l'entraînement (5), pouvant être rabattus et recouvrant les dispositifs de support latéraux (3, 4), de telle sorte que seulement après leur rabattement, des poignées d'actionnement (18, 19) s'étendant depuis l'extérieur jusqu'au plateau de blocage (15) et pouvant être reliées à celui-ci par coopération de formes peuvent être mises en place.
